# EUROPEAN PATENT SPECIFICATION

(11) **EP 2 897 509 B1**
(45) Date of publication and mention of the grant of the patent: **06.04.2016**
(21) Application number: 13831854.8
(22) Date of filing: 16.09.2013
(51) Int. Cl.: A47J 31/60

(54) **BEVERAGE MACHINE**
GETRÄNKEMASCHINE
MACHINE À BOISSONS

(30) Priority: 20.09.2012 GB 201216808; 05.11.2012 GB 201219874; 14.12.2012 GB 201222604; 18.12.2012 GB 201222851
(43) Date of publication of application: 29.07.2015
(73) Proprietor: Costa Limited, Dunstable LU5 5XE (GB)
(72) Inventor: ACHTMANN, Eric, 81679 Munich (DE); STIRNIMANN, Rene, 6353 Weggis (CH); GREEN, Alan, Reading, Berkshire RG30 3 UA (GB); EGLI, Conradin, 8864 Reichenburg (CH); JUNG, Jonas, 6353 Weggis (CH); VOGELSANG, Bruno, 8864 Reichenburg (CH); MARTIN, Scott, Dunstable LU5 5XE (GB)
(74) Representative: Roberts, Gwilym Vaughan
(86) International application number: PCT/EP2013/069177
(87) International publication number: WO 2014/075833

(56) References cited:
- WO-A2-2009/099330
- US-A1- 2010 203 209

## Description

### Background

Known beverage machines suffer from various problems. It is desirable in some instances for beverage machines to require minimal installation and maintenance but many beverage machines currently require manual cleaning regularly, significant repair downtime, provide high waste overhead and are difficult to install and remove. Additionally significant time is required in training users on existing machines. Current beverage machines in many instances have deficient user interfaces with significant complexity for users both in terms of selections presented and complexity/number of options. Furthermore existing machines often require repeated entry of common information for each use by a user.

Existing machines, and in particular areas of these which dispense ingredients and collect waste, are difficult to keep clean. Therefore, a good standard of hygiene is difficult to maintain.

Current machines suffer from problems additionally in the number of options available and the manner of dispensing those options from a service port together with sensing and layout deficiencies. The machines are often very bulky which can give rise to difficulties in opening and closing as well as mounting banks of multiple machines.

Current beverage machines have multiple ingredients and options yet suffer from the problem of accurate monitoring of content type and level and often suffer from significant content loss especially for user removable content. The power demands on current machines are high and improved power management regimes are required. Furthermore, known machines have no, or insufficient data collection and transmission capability.

US 2010/203209 discloses a process and system for brewing beverages. The process involves mixing beverage solids and water into a slurry to extract water soluble material and subsequently and independently filtering the beverage solids from the slurry. Extracted solids are collected in a filter basket which is removed in order to remove the waste solids. In contrast to the present invention, no compacted beverage waste element is produced and hence no system or process is disclosed for dealing with such a waste element.

### Summary of the Invention

The invention is set out in the claims.

### Figures

Embodiments of the invention will now be described, by way of example, with reference to the drawings of which:
Figure 1 shows an overview of one embodiment of the machine
Figure 2 shows a view of the front of one embodiment of the machine
Figures 3a and 3b show an embodiment of a service port from the front and rear
Figure 4 shows an embodiment of a cup dispenser
Figure 5 shows an embodiment of a sugar sachet orifice
Figure 6 shows an embodiment of an external waste system
Figure 7 shows a detailed view of one embodiment of a door hinge structure
Figure 8 shows an overview of one embodiment of a chassis
Figure 9a shows an embodiment of the service port including waste tray and sensors
Figure 9b shows an embodiment of a spout assembly
Figure 10 shows one embodiment of a palette installation procedure
Figures 11a to 11d shows a coffee hopper embodiment
Figure 12 shows detail of an approach permitting monitoring of milk in the machine
Figure 13 shows detail of one embodiment of a chocolate mixing system
Figure 14 shows one embodiment of a flavouring module
Figure 15 shows a view of one embodiment of an internal waste module
Figure 16 is a flow diagram showing the steps involved in operation of the machine
Figure 17 shows one embodiment of a cleaning system
Figure 18A shows a side view of an embodiment of a machine.
Figure 18B shows a front view of an embodiment of a machine.
Figure 19 shows an embodiment of a dry ingredient chute.
Figure 20 shows an embodiment of an array of dispensing spouts.
Figure 21 shows an embodiment of a dispensing spout.
Figure 22 shows an embodiment of an integral service cover.
Figure 23 shows an embodiment of a liquid ingredient-monitoring arrangement.
Figure 24 shows an embodiment of a machine in which the door is in an open position.
Figure 25 shows an embodiment of cup dispense port reinforcement and flexible flanges.
Figure 26 shows an embodiment of a door yoke.
Figure 27 shows an embodiment of a scent cartridge release mechanism.

### Overview

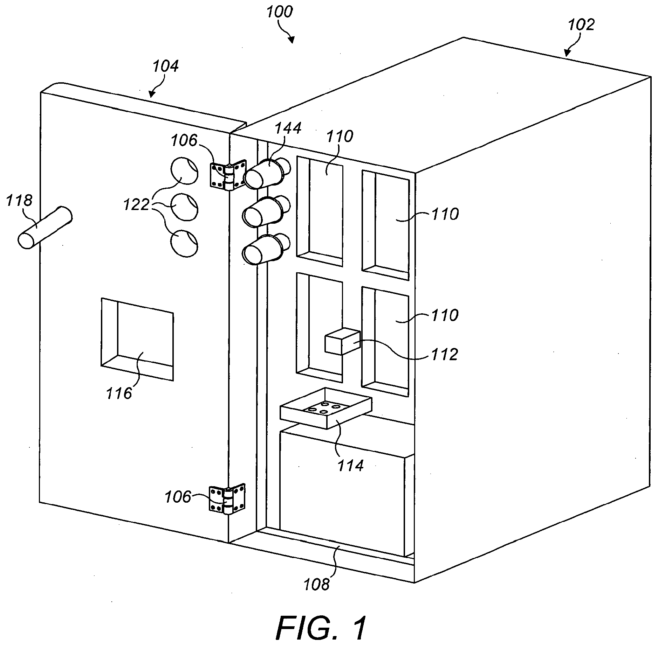

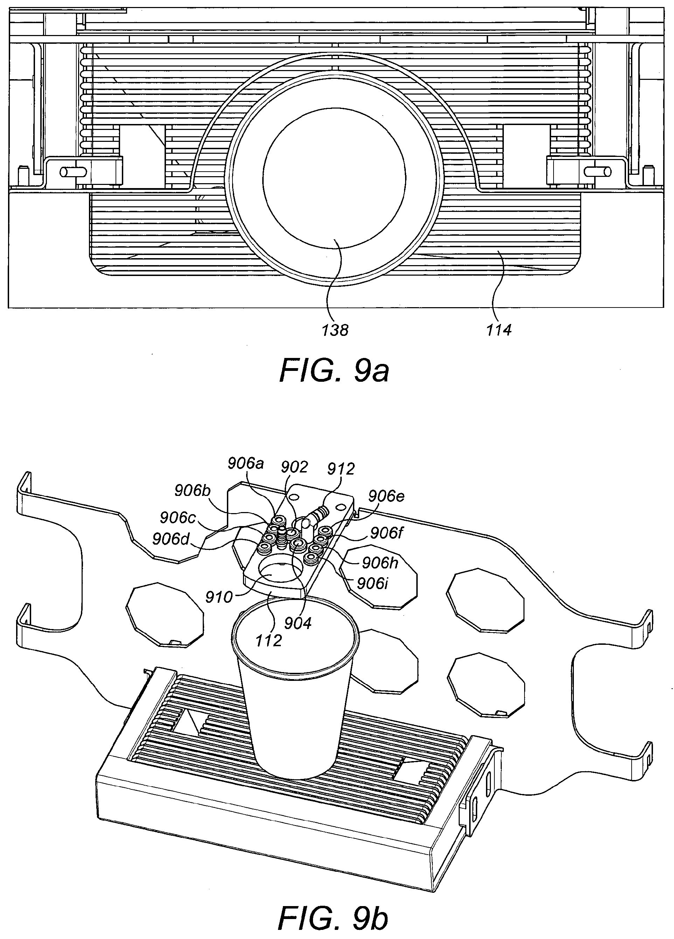

An automated beverage machine for vending of hot, cool and cold beverages including coffee, tea, chocolate, flavoured beverages, milk beverages and cold/iced beverages is shown in Fig. 1 at 100. The machine includes a body 102 and a door 104 connected thereto by hinges 106. The body is supported on a chassis 108 which carries a plurality of modules 110, a dispensing spout 112, cup and other consumable dispensers 144 and a waste tray 114 (as shown in Fig. 9a). The spout and waste tray 114 cooperate with an aperture 116 in the door 104 to form a service port. The door further carries a user interface (not shown) optional payment system (not shown), consumable dispensing ports 122 such as cups, cups lids and sugar (not shown) and an external waste container 118.

The machine provides improved utility, with simplified on-site installation, sophisticated power management, content and machine condition sensing and highly automated cleaning and waste disposal requiring minimal operator intervention. A fully modular system using modules 110 allows minimisation of repair downtime, as both predictive and reactive maintenance can be instituted by removal and replacement of the designated module 110. The modular nature extends to the user interface provided on the front of the device which can be interchangeable allowing different "skins" to be presented.

Using advanced control, sensing and power management a flexible and wide range of beverages and flavours can be provided in appropriate storage sites including mini and micro dosage with improved content dispensing of both wet ingredients such as water, milk, coffee and syrup and dry ingredients such as chocolate powder and sugar. Optional automated and simplified cleaning allows minimal maintenance, and a highly automated and self cleaning internal waste removal system additionally reduces any downtime and user intervention requirements.

The machine provides improved operability, with an enhanced user interface providing touch or remote user selection as well as sound and fragrance content, and minimised user interaction time. Pass-through ordering is available by a ready-for-order or preference based on data remotely accessed from, for example a user card. Management of content is provided both by monitoring of quantity and content type from insertion of content through use of content to disposal of content, minimising waste and potential for human error.

The machine provides improved operability and data management using an enhanced user interface with touch or remote user selection as well as sound and fragrance content. Remote interaction with user data storage (for example near field chip (NFC) or RFID) permits immediate or automated user selection and payment. All data related to a transaction is collected and automatically transmitted to a central data station remotely permitting improved content and maintenance support and reporting as well as collection of all transaction data for processing and analysis. Connectivity through the internet provides rapid low cost communication and the ability to provide onsite, on-line training and support. Remote control of individual modules can also be achieved. For example the flavour module can be remotely controlled to provide remote customization of the available flavour options.

The machine can be a large or smaller sized floor mounted model for commercial or office use, or a smaller size such as desktop or work surface mounted.

### Structure

### Door

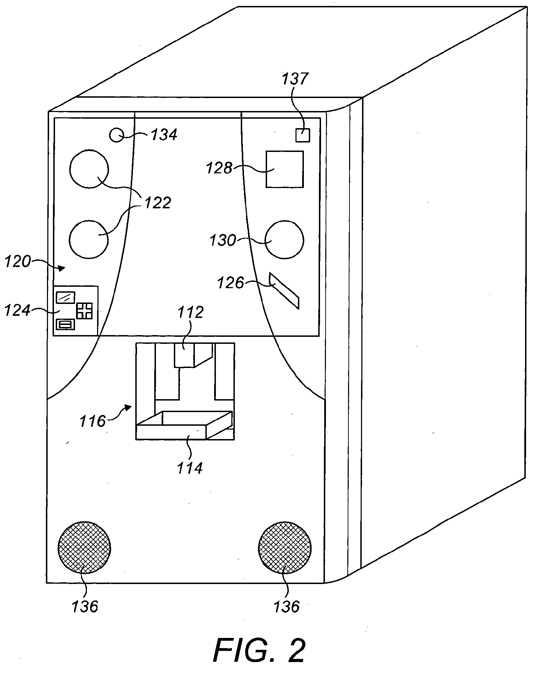

Referring to Fig. 2 the door can be seen in more detail as including the service port 116, a user interface generally shown as 120 and ports for consumables 122, for example for cups (only a single cup type is shown for ease of viewing but multiple ports can be provided for respective cup types including insulated cups) and cup lids as well as a sugar sachet dispenser port 126, stirrer port 128 and external waste aperture 130. Additionally the door carries a camera/proximity sensor 134 and speakers 136 and fragrance port 137 and optionally a microphone (not shown) permitting service calls and voice recognition, as well as sound system feedback. A payment system 124 is also mounted on the door for example a number pad, chip and pin pad, NFC sensor, RFID sensor, coin receptacle or any other appropriate means of payment.

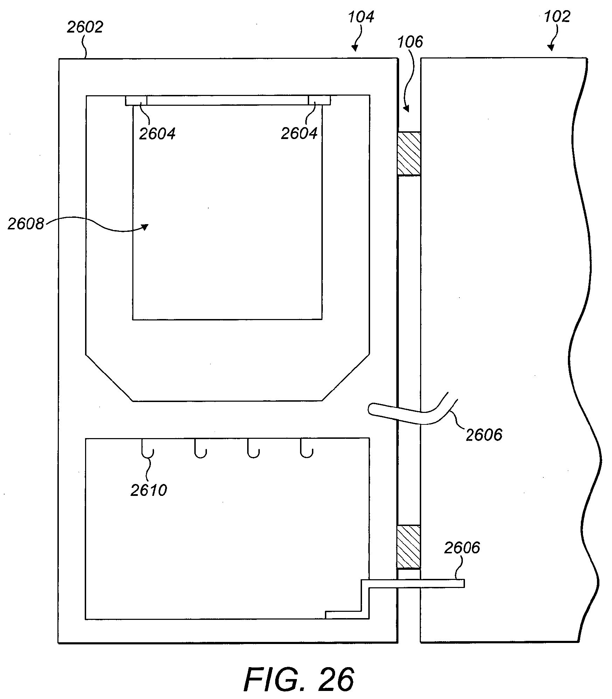

The door itself can comprise a structural element for example of integrated polyurethane providing strength and customisability with appropriate trim or modules; further, doors can be interchanged or retrofitted as appropriate. Preferably the structural element includes a horizontally extending crossbar or multifunctional "yoke" 2602 (Figure 26) which provides strength to the door and which can be used to mount elements on the inside of the door. For example, flavouring containers (discussed in detail later) may be hung from the underside of the yoke 2602 using hooks 2610. The yoke can also be used to channel/guide any power, control and liquid lines 2606 running to or across the inside of the door. It is preferred if the screen 2608 is hung from the yoke using screen fixing members 2604. Hanging the screen in this way limits stress on the screen. Additional mounting at the sides and/or base of the screen may be provided (not shown). Preferably, the positioning of the screen permits access to all electrical components for controlling and powering the screen. This allows for easy and rapid replacement of such components without the need to first remove the screen, thus minimising potential for damaging the screen during maintenance.

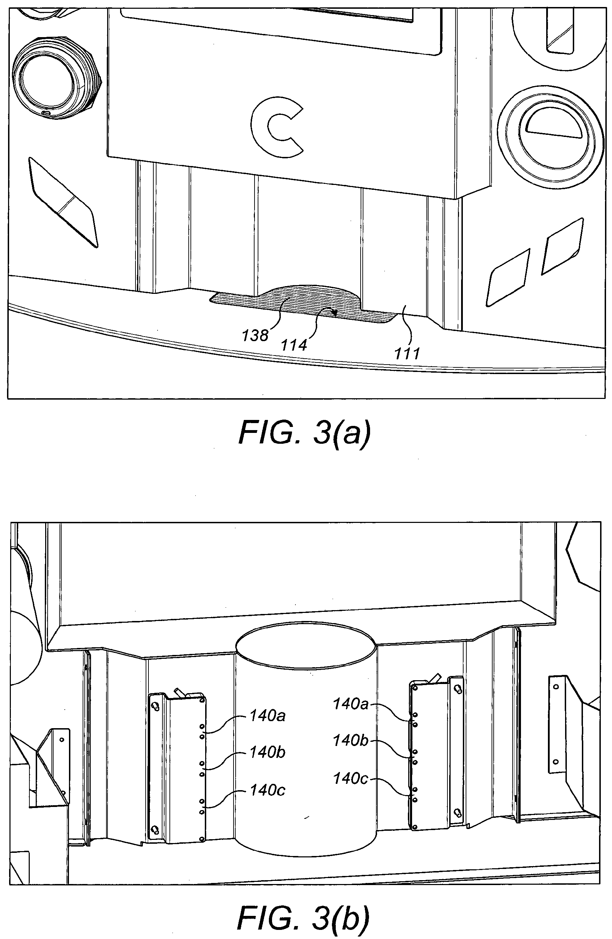

The service port aperture includes a rear moulding 111 allowing access to spout 112 and which meets waste tray 114 to provide an enclosed space. The waste or drip tray can be automatically self-rinsing for example via the automatic cleaning pump lines (see below). Over the waste tray 114, as seen in Figs. 3a and 3b, a cup stand is provided which comprises a locating region 138 for locating a cup to be filled. Additional space is provided for resting two additional empty or filled cups at the same time for user ease. In some embodiments, clearance is provided between the rear moulding 111 and the cup stand. This avoids the creation of a "dirt trap" between the two components. Optical sensor pairs 140a, b, c are provided at different heights, for example three or four, allowing the presence and height of the cup to be detected. The sensors can be of any appropriate type for example transmission or reflection based. The sensors are positioned to ensure that they only detect presence of a cup placed in the locating region 138, and in the embodiment shown comprise three sensor- detector pairs mounted at different heights with respective beams traversing the dispense area. As a result, cups of all possible sizes can be detected using logic based on the number of beams interrupted. This in turn can allow the options presented to the user to be customised based on the cup selected. For example if a small cup is detected, espresso options only will be presented. Conversely, if a cup is not placed, then post-selection the screen can indicate the correct cup. As discussed below a multi-syrup head is provided at the service point which can be removable and simply cleanable. By use of viscous syrups drippage and air ingress (and hence contamination) is eradicated.

The user interface comprises a screen which effectively occupies the whole of at least the upper part of the front of the door or a portion thereof that is not occupied by, for example, dispensing ports. The screen is preferably a touch screen with integrated circuitry allowing it to be seamlessly mounted in, and indistinguishable from the remainder of the frontage of the door.

The user interface is described in more detail below but can interact with the camera 134 (discussed below) as well as internal sensor information relating to contents and cup placement, data from the controller specific to the time or location of the user interaction and data derived from the users themselves for example via a card such as RFID or NFC. The interface is contextual to adapt to its environment for example using the camera to obtain images of the local environment and use these as part of the displayed image. As a result the user interaction with the beverage machine is a full user experience with visual, touch, sound and scent input together with a highly intuitive and customised selection process through the touch screen as defined in more detail below. The user interface can present an internal view of a beverage store as a café as though through a window rather than conventional screen icons.

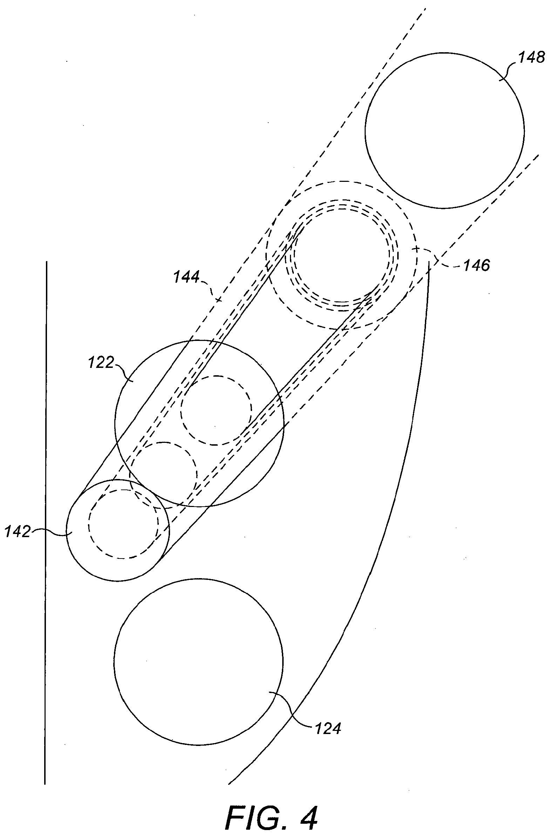

The cup dispense port(s) 122 can be further understood from Fig. 4 in which it can be seen that one or more stacks of cups 142 is provided in a downwardly inclined feed channel 144 for manual removal, one at a time, by the user. The cups are urged downwardly by a plate 146 which slides in the channel and is itself pushed downwardly by a freely sliding weight 148 such as a weighted ball. Hence a simple and reliable manner of dispensing the cup is provided, providing a constant bias whatever the level. Preferably, a one way release mechanism is provided which permits cup removal but physically blocks the insertion of a cup into the machine from the outside by a user. For example, the release mechanism or a portion thereof in the form of a pivotally mounted rod or latch may have a free end configured to lay on and slide over the top surface of the cup as it is removed, dropping down into a blocking position once the cup is fully removed from the dispense port to partially block access to the dispense port. The release mechanism can only be accessed when the door is open at which time the mechanism can be lifted to permit restocking of cups. The cup base is visible and can carry relevant information such as cup size.

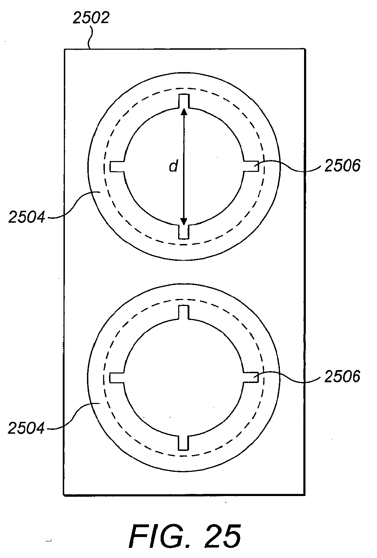

Preferably the channel 144 is housed in the machine body 102 and the dispense port(s) 122 are situated in the door 104. In some embodiments, the dispense ports(s) are provided with an apertured reinforcing plate 2502 (see Figure 25) which can be fixed to the inside of the door 104. Such a plate strengthens the regions of the door between ports 122 but is shaped so as not to impede access to the cups via the ports 122.

Each port 122 may be provided with an annular, flexible flange 2504 which is preferably fixed to the reinforcing plate 2502. The diameter "d" of the flange opening is preferably smaller than the diameter of at least the widest diameter of the cup to be dispensed via that particular port. The flange 2504 comprises one or more slits 2506 that allow the diameter of the flange opening to reversibly increase to facilitate passage of a cup therethrough. The flange is rigid enough to prevent cups from falling out of the dispensing port, i.e. the force of the weighted slide 148 alone is not great enough to flex the flange. However, a user can easily overcome the resistance provided by the flange to temporarily increase the diameter of the flange opening to permit release of a cup.

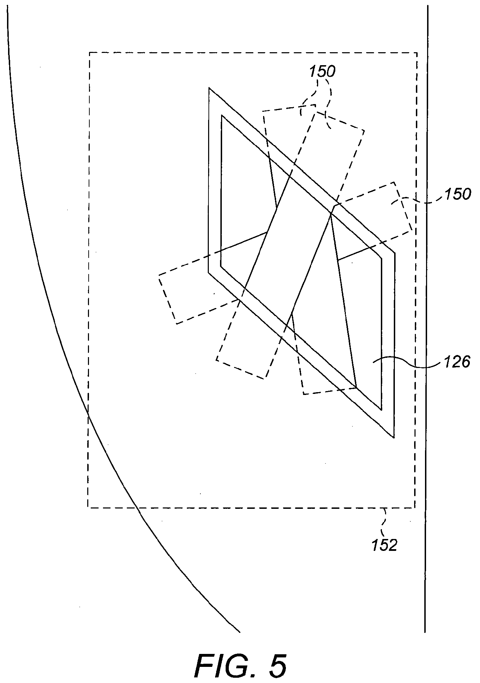

Referring to Fig. 5 the sugar sachet dispenser slit 126 can be seen in more detail. As can be seen, sugar sachets 150 are shown for purposes of illustration. The slit is designed to minimise unwanted falling out of sachets or removal of more than one sachet at a time. A loading box 152 is mountable to the rear of the door, containing the sachets and with a dispensing orifice open to or aligned with the diagonal slit 126. In particular the diagonal slit 126 has vertical side edges and a bottom tip slightly above the bottom of the floor of the box 152. The length of the diagonal slit 126 is slightly less than a sugar sachet and the width (height) is sufficient to allow passage of a folded sugar sachet or a user's fingers. The particular orientation selected can be optimised for right handed use or right and left handed slots can be provided.

According to this approach it is found that sachets are retrieved singly rather than having any wastage and do not rip whether removed rapidly or slowly such that a simple and easily implemented and theft-proof approach is permitted.

In some embodiments, the machine is provided with a straw dispenser comprising a loading box mounted in the rear of the door or on the chassis and a dispense port on the front of the door. The dispenser is designed to ensure that only a single straw can be removed at a time and minimise or eliminate unwanted falling out of straws. The dispense box comprises an outlet positioned slightly above the dispense port, such that straws preferably drop one-by-one into the dispense port. The configuration means that as a straw is removed, the next straw is allowed to drop into a position accessible from the dispense port, while all other stored straws remain inaccessible from the dispense port.

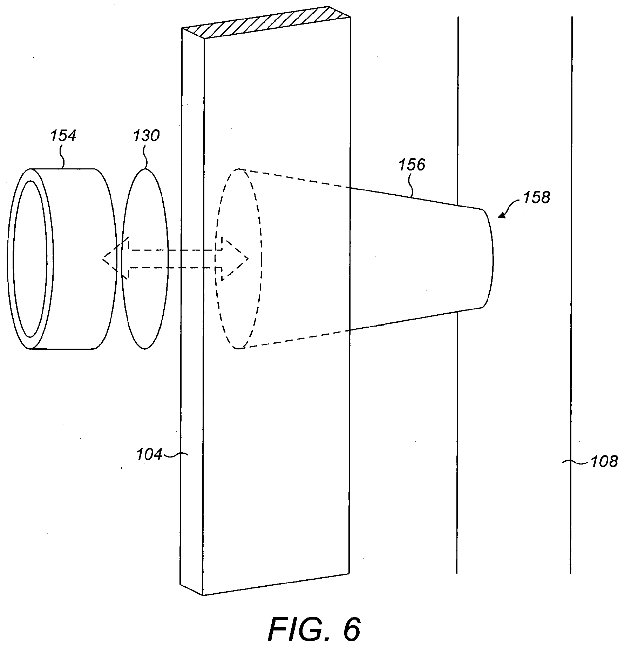

The external waste system can be further seen in Fig. 6. In particular a mounting annulus 154 can hold the end of a waste receptacle 156 which can for example be a large beverage cup which is a press fit or otherwise received in it hence using the inherent waterproof and structural strengths of the cup. The mounting annulus 154 is then mounted in the aperture 130 again either by a press fit, bayonet fit or magnetic attraction between the annulus and clear mounting as appropriate and the receptacle 156 extends rearwardly from the door. Users can thus place waste such as used stirrers, sugar sachets and so forth directly in and the receptacle 156 can be angled downwardly appropriately. Removal of the receptacle is simple - the mounting annulus 154 is extracted from the front of the door and the receptacle 156 can simply be replaced and discarded. In a further improvement, the external waste receptacle obscures a keyhole 158 provided in the chassis 108. The keyhole 158 can be simple, non conventional shaped keyhole requiring a specialist user key for example a proprietary lock of the type found on railways. To open the lock hence allowing opening of the door 104, it is simply necessary to remove the waste receptacle 154, 156 and open the lock using an appropriate key. As a result the operator is encouraged to discard the external waste and present a clean receptacle 156 each time the door is unlocked, ensuring that the external waste does not become overfull.

Additionally a camera 134 is provided which can be any appropriate type for example of a type which provides proximity detection, and image recognition for example allowing the proximity age/gender/cultural identity of a user to be determined and permitting discerning between a passerby and an integrated party for example by eye recognition. This information can be used in interaction with the user interface to customise presentation or options accordingly. For example, adverts displayed on the UI could be targeted to a particular user demographic. In addition, the viewer dwell time can be used to evaluate the effectiveness of a particular advert and combined with other information about the user to correlate the effectiveness of the advert with each user demographic.

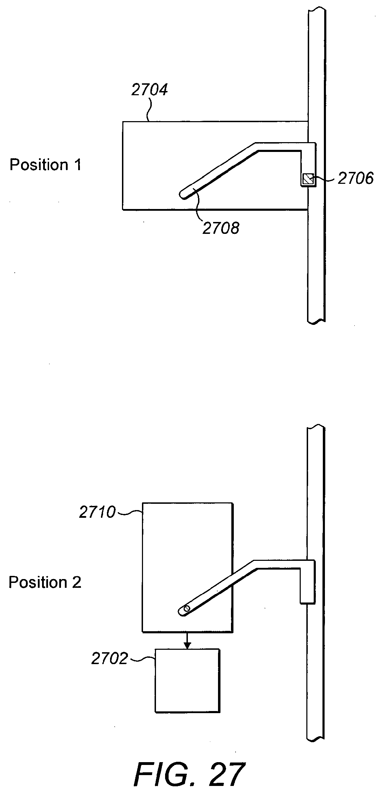

Additionally scent can be provided through scent port 137. The scent can be provided in any appropriate manner for example using a "dry" scent production key mountable to the rear of the door of any suitable type, comprising aerosol or non-aerosol and residue or non-residue dispensing. In some embodiments, the scent is stored and released from a replaceable scent cartridge 2702. In use, the scent cartridge is stored in a cartridge holder 2704 secured to the inside face of the door. The cartridge holder comprises horizontally extending and opposing external pins 2706 which are arranged to run along respective curved guide tracks 2708. This provides a cartridge release mechanism which permits rapid and easy replacement of scent cartridges. To replace a cartridge, the operator manipulates the cartridge holder so as to move pin 2706 along guide track 2708, thus moving the cartridge holder 2704 from horizontal position 1 (scent release position) to upwardly tilted position 2 (cartridge release position) (see Figure 27). Once the cartridge holder 2704 is at position 2, the cartridge holder 2704 can rotate so as to expose an open end 2710 thereof, thereby allowing the cartridge 2702 to slide out of the holder 2704.

The majority of the componentry is mounted on the chassis rather than the door as described in more detail below. As a result the door or the façade of the door can be viewed as a "skin", easily removable or replaceable to allow the look and feel of the machine to be rapidly varied.

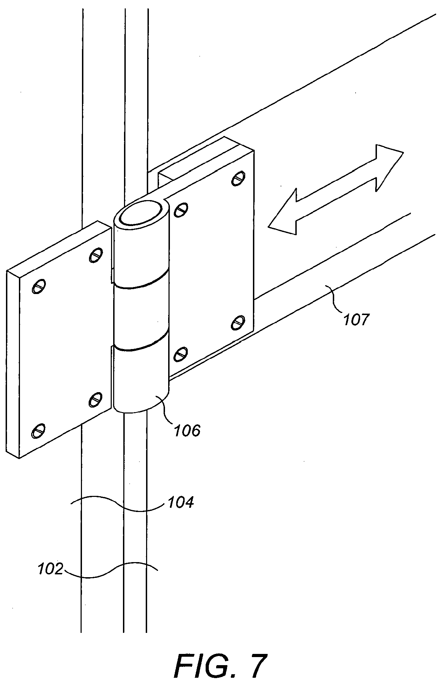

The door is mounted by hinges 106 to the as can be further seen in Fig. 7. In particular the hinge permits both translation and rotation allowing the door 104 to be simply opened without interference with components within the chassis. This is achieved by mounting a hinge 106 permitting rotation on a body or chassis mounted slide 107. To open the door, once it is unlocked, the door and hinge first slide away from the body on the slide 107 after which the door 104 can be swung open with clearance for the various components. In another embodiment, the clearance between the door and machine body is such that a hinge that permits only rotation is sufficient. Yet further the hinge 106 is mountable to either side such that a left-or-right door can be provided. This permits placement in any position and also permits placement of banks of at least two machines with doors opening from opposite sides again to prevent interference.

### Chassis

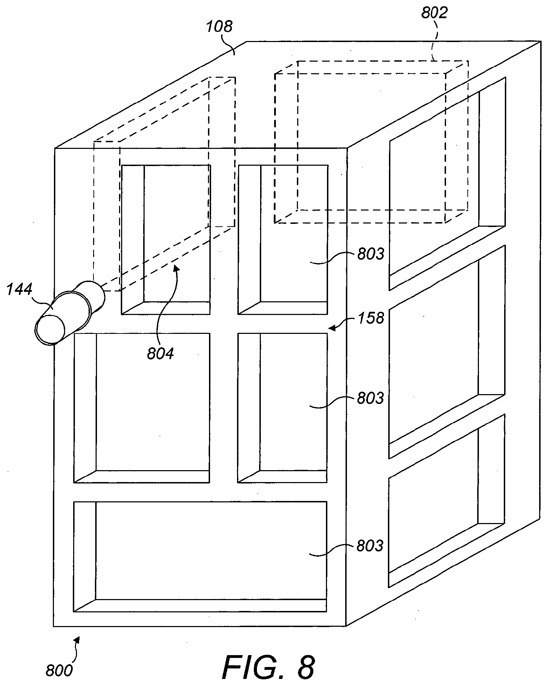

The chassis is shown in unloaded format in Fig. 8 and generally comprises a lightweight load bearing frame 800 carrying consumable dispensers 44 and comprising multiple recesses 803 into which respective modules can be simply plugged and removed, all accessible from the front. Each recess includes couplings for power, water, cleaning, etc. which automatically seal and engage on insertion of the modules allowing simple replacement and hence minimal repair/maintenance downtime. In particular a full, turn key cleaning process is provided for all appropriate modules allowing cleaning detergent to be flushed through and cleared simply by insertion and engagement of a cleaning tablet. Low power internal lighting such as LED lighting can be provided. Modules include a brewer/grinder/boiler, chocolate drink, chocolate powder, flavouring (including syrups), water and hydraulic, pump milk, ice, internal waste, master control system and power management, cooling/refrigeration and remote data connectivity. Various modules will be described in more detail below, but at least the brewer/grinder/boiler modules, electrical and hydraulic fittings and cleaning system can be of the type available from Thermoplan AG of Weggis, Switzerland. Content such as coffee, flavour, milk can be provided in bags allowing simplified packaging and sensing.

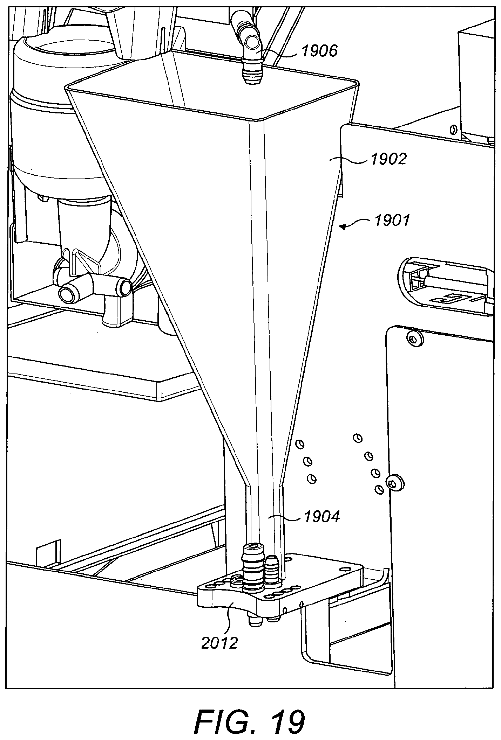

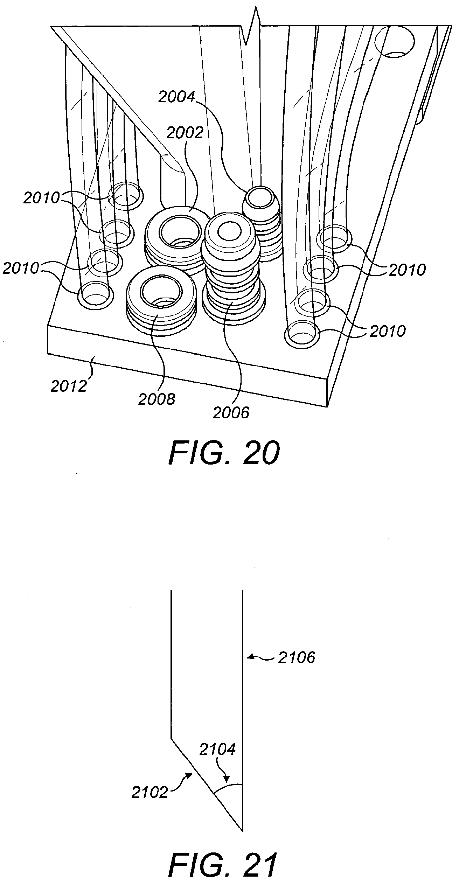

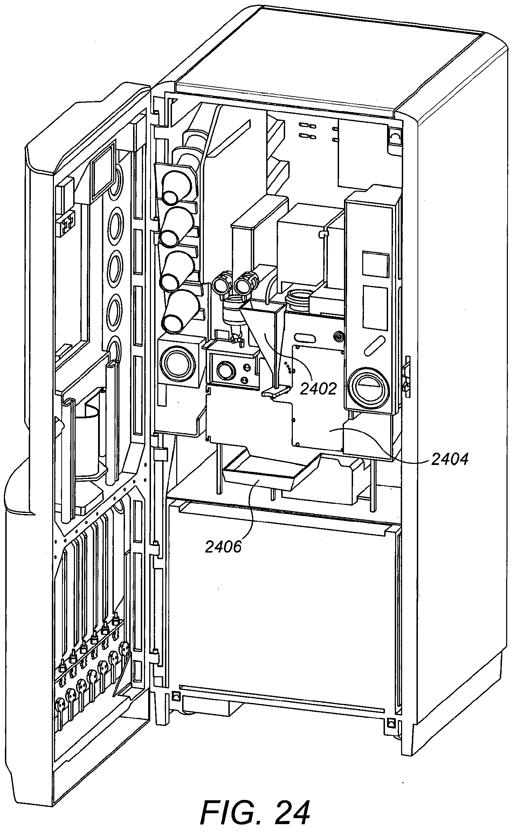

The chassis additionally carries the waste tray 114 and cup locator 138 for the service port which is connected to the cleaning circuit together with the dispensing spout 112 (as shown in Fig. 9a). The sensor assembly for sensing cup positioning and type as discussed above can be provided on the chassis or the door as appropriate. The spout 112 comprises a close-packed array of dispensing spouts (112a-112i) for the various ingredients including water 902, milk 904, one spout 906a - h per flavour or syrup, coffee 908 and ice 910 together with chocolate powder and/or sugar dispensing. This close-packing is shown in more detail in Fig. 9b. In some embodiments, dispensing of dry ingredients such as sugar is aided by a chute 1901 (as shown in Fig. 19). The chute comprises a funnel 1902. The funnel is positioned below a sugar dispense point and tapers to a spout 1904 which may be integrated into the close-packed array of dispensing spouts in the spout assembly as shown in Figure 20 (discussed in more detail below). Alternatively, the spout may feed to a separate dispensing spout located in the spout assembly. The chute is preferably fed with dry ingredient by a feeder spout 1906. The wide opening of the funnel 1902 permits high velocity, low accuracy feeding of the chute which in turn supplies the narrower spout 1904 with the dry ingredient for accurate dispensing. This arrangement advantageously prevents clogging at the point where the dry ingredient is dispensed because of the high velocity at which the dry ingredient travels down the chute. An embodiment of the chute can also be seen in Fig 24 at 2402.

To enhance dispensing of dry sugar further, the chute 1901 may include an air conduit (not shown) running partway or fully down to a position adjacent to the chute outlet, to provide positive air pressure or air flow in a downward direction. The conduit can be, for example, a pipe passing in through the top aperture of the funnel 1902 and terminating at the outlet end or spout, running from a fan or any other appropriate air or pressure supply, or alternatively a fan or other airflow source can be provided blowing down into the chute. By virtue of the provision of the air flow, downward non-clogging flow of the dry ingredient is enhanced. Yet further, the positive pressure differential or downward flow created in the chute 1901 prevents ingress of steam from the dispense point upwards into the spout of the chute, again reducing risk of moisture or clogging of the dry ingredient. In another embodiment, an air deflector is provided to direct airflow from the brewer/grinder/boiler into the chute.

In one embodiment the air flow can be taken from a common source with the chocolate module discussed below. For example where a fan provides air flow to the chocolate mixer or augur, a branch can be taken from the conduit to run into the sugar chute. Alternatively a vacuum can be provided to the chocolate mixer to draw content down, and the positive pressure outlet of the vacuum source can provide the positive air flow or pressure to the sugar outlet. In some embodiments, heated air is provided by the normal operation of the brewer/grinder/boiler.

Figure 20 shows in more detail how spouts for milk 2002, coffee 2004, chocolate 2006, tea 2008 and flavourings 2010 can be arranged in a close-packed array on a head 2012. In particular, flavouring or syrup spouts or ports are provided in two exterior rows of four. Between those, fluid spouts/ports for, for example milk, tea, chocolate and coffee, are provided in two staggered or parallelogram configuration to provide closest packing, and the sugar spout is provided in the remaining space behind the fluid ports. As a result the entire array can be positioned within the opening of any size of receptacle, for example an espresso cup.

The spouts may protrude through a flange or head 2012 which can in some embodiments include a removable "shoe" (not shown) fitted to the underside thereof to improve hygiene and ease cleaning. When fitted, the shoe protects the flange from dispensed ingredients such as coffee, flavouring and milk. The shoe can then be removed and either cleaned and re-fitted or disposed of and replaced to facilitate simple maintenance of the spout area on or off site.

With reference to Fig. 21, the plane of the ingredient-delivering opening 2102 of one or more of the dispensing spouts, for example, the flavour-dispensing spouts, is preferably provided at an angle 2104 relative to a generally vertical wall of the dispensing spout 2106 of less than 90 degrees. The angle may be approximately 45 degrees. This minimises the capillary effect exhibited by spouts having openings which are at 90 degrees to the vertical walls. The result is that final drops of ingredient are immediately dispensed rather than being retained at the opening of the spout. This minimises waste (less ingredient is lost into the drip tray) and reduces coagulation of the flavouring ingredients at the opening thereby improving hygiene.

The waste or drip tray 114 can include metallised composite coating or components such as the back portion or the drip tray itself providing enhanced weight reduction and tolerance reduction. It will be noted that additional components can equally have metallised composite composition or coatings such as parts of the front of the door, trim surrounding consumable outlets for cups and stirrers and so forth. Preferably the drip tray is angled downwardly to encourage drainage of waste into a tank. In some embodiments, the drip tray 114 is coated or treated with a hydrophobic film to reduce moisture adherence. This advantageously increases passive hygiene. Of course, other areas of the machine such as the spouts, pumps, lines and ingredient containers could be coated with such a hydrophobic film and where possible, angled.

The chassis further carries a lock keyhole 158 as discussed above which can be of any appropriate type to allow opening of the door for example internal or external and which can for example be a magnetic lock.

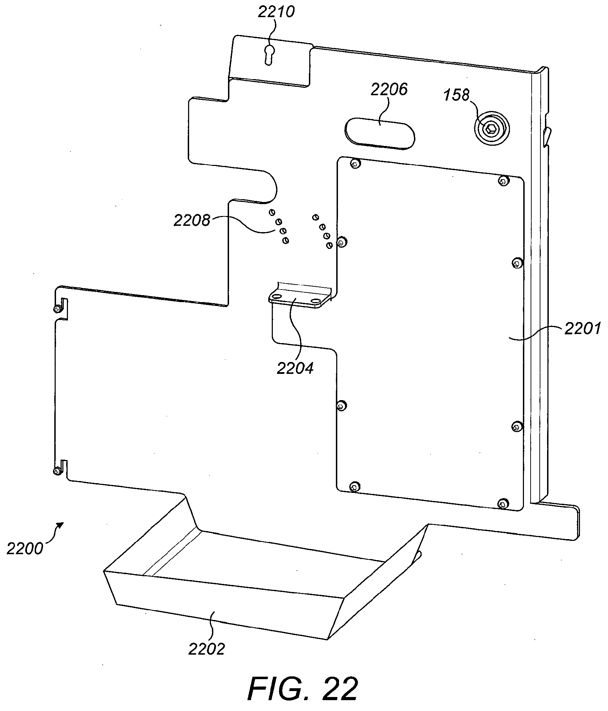

With reference to Figure 22, an integral service cover 2200 may be provided as part of the chassis to cover modules and control access thereto. Access may be achieved by removing a cover plate 2201 forming part of the service cover thus providing a simple means to maintain the modules. A drip tray 2202 may be formed as part of the service cover. This can also be seen in Fig. 24 at 2406. The service cover may include one or more of the following: a mount 2204 for the spout assembly head 2012, a window 2206 for ease of visual inspection of the machine modules, access means for the flavour supply spouts 2208, the lock keyhole 158, and a mount 2210 for the chute 1901. Providing an integral service cover comprising the above features minimises parts thus simplifying manufacture of the machine whilst enhancing the appearance of the chassis when the door is open. An embodiment of the integral service cover in an installed position can be seen in Fig. 24 at 2406. At 802 the chassis carries one or more control boards for control, connectivity and power management for the machine. The board can be single or multiple processors and in hardware, software or firmware as appropriate, and can be configured and updated remotely as necessary. Turning firstly to control, the board receives inputs from the user interface, remotely and from the various ingredient and consumable sensors described herein allowing control of the beverage dispensing process as well as providing data to the user interface to ensure that options are correctly placed. The sensors can include ingredient sensors such as coffee, water, milk, flavouring, sugar, chocolate power and so forth as well as consumables such as presence and nature of cup at dispensing port.

Based on this the controller 802 can ensure that the options presented at the UI are limited to available ones based on available ingredients and presence of a cup as well as nature of the cup. The controller can also store information regarding user selection, time of selection and location in order to build a database to be compiled ensuring improved targeting and stocking dependent on detecting trends and user preferences. Additionally stock management and replenishment can be managed remotely based on the recorded information.

Regarding power management, the power demands of the machine can be regulated or varied dependent on available power to permit intelligent management of the available power. For example, when power demand is high, such as during dispensing of a beverage, the controller can reduce or switch off power to components such as the fridge or boiler.

In terms of connectivity, based on the sensed data, be it user/beverage selection data or sensor data relating to ingredients and consumables, this can be communicated via the internet to a centralised station to allow processing and analysis of the data and feedback of that analysis to provide improved user experience. As all data is collected the machine hence performs as a data collection and storage device additionally dispensing beverages, allowing unprecedented enhancement of the user experience. Through use of internet protocol, the data processing and transition requirements are minimised and allow use of generic systems.

Yet further, through condition sensing of the device, maintenance support can be enhanced either by alerting local staff to perform maintenance or replenishment steps, or deploying remote staff as appropriate. Yet further training and maintenance can be provided remotely through an operator interface 804 in communication with the processor and controller 802. Instructions for replenishment and maintenance can thus be automatically and remotely provided and updated for the operator via the internal operator interface 804 which can be any appropriate screen, monitor or processor. Yet further initial training of operators can be performed through the interface from a central location significantly reducing the training time and burden. Further still, this resource can hence be updated centrally such that updates to the training process can be propagated to all machines simultaneously and instantaneously.

In addition to the modules discussed in detail below, in an alternative embodiment the chassis can additionally support the external waste rather than this being supported on the door which, in some embodiments, can simplify door design as reduced clearance is required.

In embodiments the chassis can carry one or more modules which interact with the door, for example projecting through orifices or spaces in the door for customer use. For example this can include the payment module and, as indicated above, the external waste module. As discussed in more detail below, the arrangement described can be modular to the extent that the chassis can be fitted to different bodies and door modules. Accordingly in an embodiment, some or all of the modules, for example the modules which "look through" the body and door, can be pivotably mounted to allow ease of opening and access, and also to allow adjustable positioning relative to different door and body configurations enhancing yet further the flexibility of use of the approach.

A further benefit of provision of a fully weight-bearing chassis such that all significant weight burden is carried in this manner, is that a simplified installation process is available. The door can carry camming lugs (not shown) reducing downward moment on the hinges in the closed position by engaging in orifices in the chassis in the closed position.

In a preferred embodiment, the front of the chassis carries one or more cantilever arms at the base to prevent the machine from tilting forward, thus providing enhanced safety. Such cantilevers may be fitted with trim sections (discussed in detail below), thereby hiding them from view. In some embodiments, the rear of the chassis is provided with a buffer, for example in the form of a slide-out bar. For ease of transport and storage of the machine, the buffer is preferably retractable into the chassis. Once the machine is installed, the buffer can be deployed. Such a buffer is particularly useful when the machine is installed close to a wall or similar structure. The buffer provides clearance between the machine and the wall and is arranged to prevent the body of the machine being forced against wall, making it difficult or impossible to damage the wall-facing side of the machine in this way. The clearance provided by the buffer also ensures sufficient air circulation at the wall-facing side of the machine which aids cooling of the machine. In particular, the buffer allows a suitable distance between cooling vents in the machine body (if present) and the wall to be maintained. A further benefit of the buffer is that, by maintaining a predefined space between the wall and the machine, it ensures that, for example, water, waste and power connections do not become squashed between the wall and the machine.

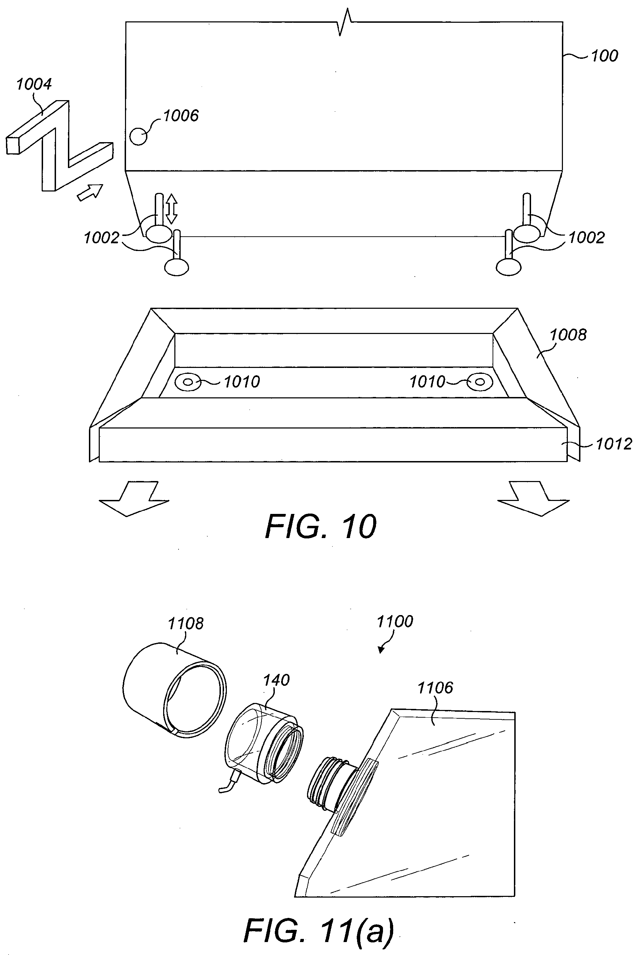

In one embodiment the installation procedure can be understood with reference to FIG. 10. The underside of the machine 100 includes retractable feet 1002 which can be lowered and raised simultaneously in any appropriate manner for example by inserting crank 1004 into aperture 1006 and operating a mechanical linkage. The machine is mountable on a palette 1008 which has wheels allowing it to be rolled, two being shown at 1010. The machine is mounted on the palette with the feet retracted allowing it to be easily manoeuvred.

The palette 1008 includes a front member 1012 forming one end of a generally square frame. The front member 1012 can be removed from the remainder of the frame for example by unscrewing or otherwise detaching. When it is desired to mount the machine in position, therefore, a simple process can be adopted. Firstly, retractable feet 1002 can be lowered by the linkage activated by the crank 1004. The feet pass inside the palette frame and are lowered until they contact the floor and the machine is lifted slightly away from the palette. At that stage the front member of the palette 1012 is detached allowing the palette to be rolled away rearwardly, leaving the machine standing on its feet. The feet can then be maintained in position or raised such that the machine rests on its base as appropriate. As a result a simple and very quick installation technique is permitted.

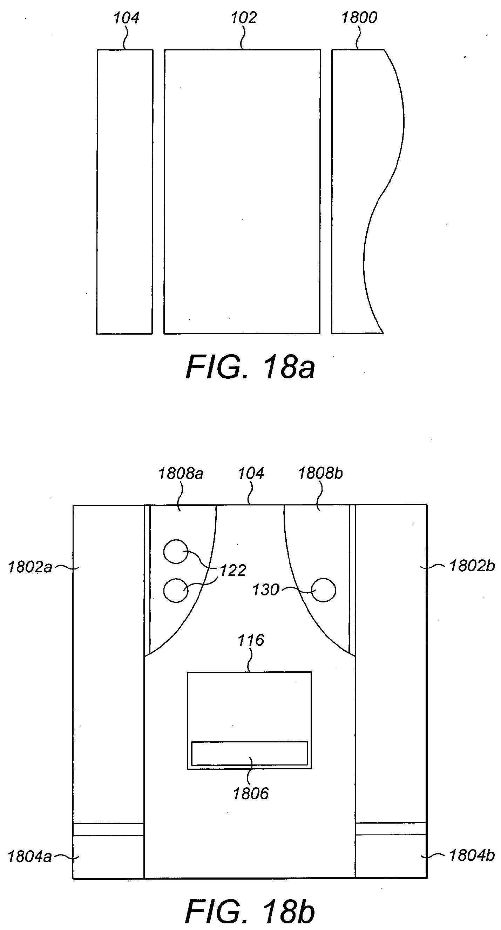

It will seen that by providing a chassis bearing the majority of modules and components, a "skin" can be easily fitted to, and replaced on the chassis with minimum downtime. This can include the outer body surrounding the chassis as well as replacement to some or all of the door. For example referring to Fig. 18a, it will be seen that the body 102 and door 104 can be of any appropriate form but that an additional body element 1800 can be optionally affixed by any appropriate means at the rear of the body 102. This allows the aesthetics of the machine to be improved in a free standing location whilst permitting a flat-back configuration, without the augmented part 1800, when the machine is fitted directly against a wall.

Similarly modification or trim parts to other parts of the door or body can be mounted appropriate. As a result a simple modifiable appearance is achievable. Additionally simplified production is achieved as the parts can carry respective colours simplifying the painting or spraying process to achieve immediate and perfect colour separation. For example referring to Fig. 18b where the door is shown generally at 104 and includes consumable orifices 122, 130 (other components are not shown simply for purposes of clarity) various trim parts are removable for example wings 1802a, 1802b on either side of the door 104, wing bases or winglets 1804a, 1804b below the wings 1802a, 1802b and at respective front bottom corners of the door 104, providing particular ease of replacement in case of scuffing, belt or table trim 1806 decorating the service port 116 and additional trim parts 1808a, 1808b decorating the consumable dispenser orifices 122, 130. Each of the parts can be individually replaced with a straightforward replacement or an alternative appearance replacement allowing both simply maintenance and maximised configurability as appropriate. The replaceable trim parts can be mounted in any appropriate manner for example by clipping, and the clips can be accessed, for example, by an appropriate proprietary tool to prevent tampering.

### Modules and Components

As discussed above, the chassis carries multiple removable components allowing for rapid repair and easy maintenance.

### Master Control System

Control is performed by the master control system which can comprise an appropriate processor which can for example be provided in one or more PCBs. As indicated above the master control system can collect both user data and sensor data and perform analysis and transmission of the data as appropriate. Additionally power management is carried out to permit operation of the various components of the machine within the limitations of the available power supply. Power management can be performed both by optimisation strategies and by intelligent PCB design. The PCB is preferably cooled passively by thermal damping means, such as, for example, a finned aluminium heat sink.

In relation to intelligent board design, in one approach all high voltage components are provided on a first board controlling operation of various components, and low voltage components are provided on a separate board. As a result the power consumption by the various components can be regulated by an external control strategy implemented on the low voltage board. Additionally, as a result, the high power board can effectively act as a slave, all control being delegated to the separate board. This allows enhanced control and customisation and the ability to upgrade control and hence drink quality and options at any time as well as the ability to perform control and update remotely, for example via the connectivity module described above.

Further the processor can locally process information prior to transmission. For example image information from the camera can be processed prior to reply at the user interface, such as modifying and replaying an image of the user. Additionally user preference data can be pre-processed before sending to a remote data centre.

Data transmission can be performed using telemetry over the air or wired for example using Internet Protocol (IP), and data can be sent to a dedicated server via the Internet or other network, to a distributed or cloud server, allowing end to end data connectivity.

### Pump

A pump is provided for pumping water both for dispensing and cleaning. The pump can be of any appropriate kind. Cleaning of the pump is performed as described in more detail below.

### Coffee making modules

Additional modules include a brewer for brewing coffee, grinder, water boiler, water supply and milk supply. As indicated above these components are generally of the kind available from Thermoplan AG. As a result the system is fully modular.

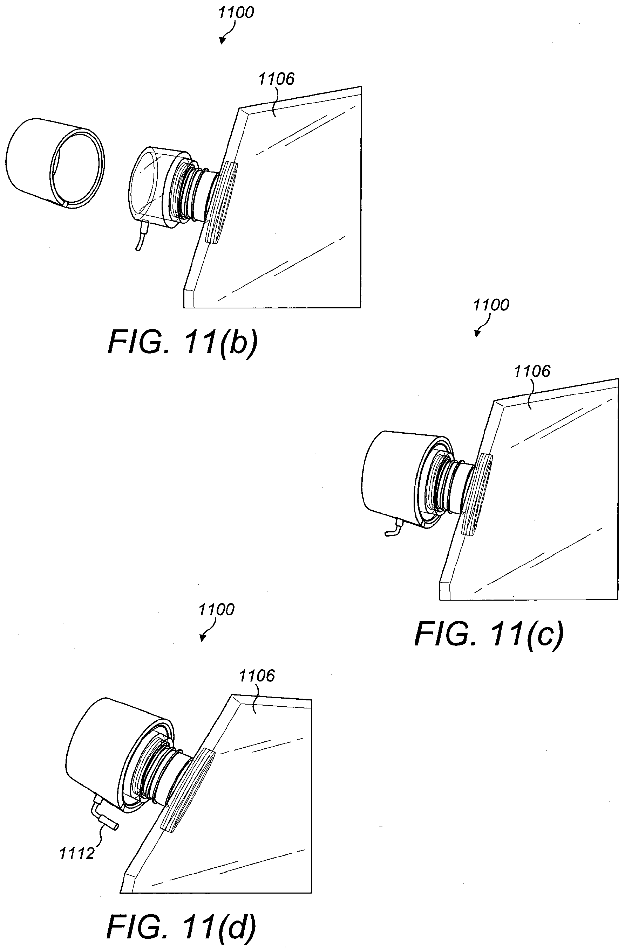

Additionally, as shown in FIGs. 11a - 11d, a proprietary coffee hopper connector 1100 is provided for mounting on the grinder module 1102 which can include optionally multiple grinders permitting variable or controllable grind quality and fineness. The hopper comprises a bean bag 1106 mountable to the grinder or mill via an adapter 1108 via a connector 1110 using a positive, detectable engagement. In the embodiment shown, the bag 1106 is opened, the connector 110 screwed on (Fig 11b), and the connector and adaptor 1108 fitted (Fig 11c). The adapter 1108 can then be fitted to the mill and a shutter in the connector opened via handle 1112. For example the hopper can be a bayonet fix actuated by the handle 1112 activating a magnetic switch (not shown) indicating to the master control system that the hopper is correctly mounted and usable. The bayonet or other security fitting can be integral with the remainder of the hopper or retrofitted such that existing hoppers can be used once modified. As a result only the proprietary hopper can be used and hence only controlled ingredient and amounts can be added to the grinder, and operation of the machine can be prevented if the hopper is not correctly fitted. The magnetic switch can be replaced as appropriate by an alternative sensor such as a sensor detecting presence of the hopper again preventing mis-operation. A capacitive sensor can additionally sense level, for example dropping below a predetermined level, and the sensor can be spring loaded to maintain correct distance from the hopper or bag as content depletes. The capacitive sensor may be provided in the adapter 1108.

Ingredient and stock control can further be implemented using an RFID tag 1106 on the hopper 1100. This can interact with an RFID receiver 1108 on the grinder 1102. This can permit authentication of the hopper as a permissible hopper such that if the hopper is not authenticated the master control system can prevent operation. The operation further permits stock management i.e. monitoring individually identified hopper usage. It will be noted that additionally usage can be detected by detecting sequential activation of the magnetic switch or other sensor 1104. As a result improved content authentication and monitoring is provided in an automatable fashion, and a closed coffee system is provided.

### Milk Module

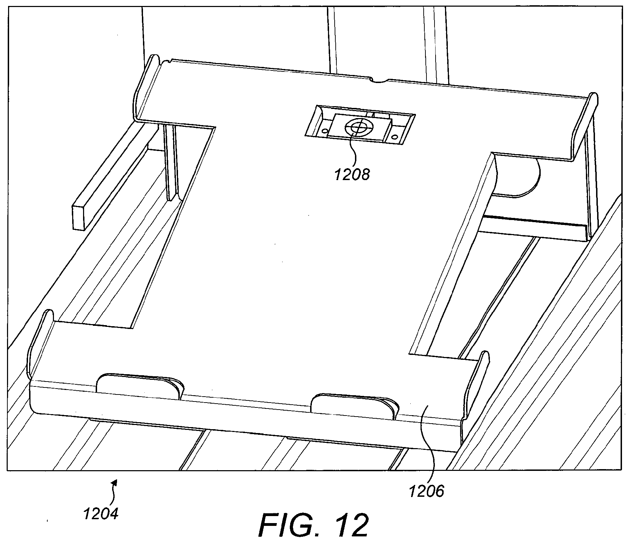

Referring to Fig 12, detail of an approach permitting monitoring of milk in the machine is shown. In particular a sensor arrangement is provided for a milk container (not shown) mounted in a refrigeration unit 1204 comprising a module of the machine. In particular the milk container is mounted on a weight threshold sensing tray 1206 which is angled, preferably between 15° to 25° to horizontal, to provide improved milk extraction and emptying, and which communicates via one or more weight sensors 1208, such as a capacitive sensor below the tray, with the master control system. As a result, if the milk runs out then the low-threshold weight is detected and milk options can be removed from the UI, the user or remote data centre can be notified that replacement is required and hence mis-operation can be prevented. Additionally, the milk can be drawn by a pumped hose (not shown) of any appropriate type attached to a spigot on the milk container and the hose can include a capacitive sensor again permitting the master control system to detect when milk runs out. Yet further when the weight of other feature drops below an intermediate threshold this can signal that the operator should prepare to replace the milk hence allowing advance notice of possible running out.

Milk weight, i.e. remaining content can in one approach be monitored by way of a digital switch detecting a predetermined weight from which individual milk use is counted to identify when content is low. For example a piezoelectric sensor would allow such detection without moving parts. This would permit use of a single trigger and trigger point rather than requiring a scale. Alternatively as shown in Fig 12 an angled or vertically movable base can be spring loaded upwardly so as to rise as the milk level/weight drops until a threshold angle or height is sensed signifying that the threshold is reached. Hence weight, level and/or presence of milk can be sensed, and a closed milk system is provided. Two or more milk containers can be mounted and the system can switch to a fresh container when empty is sensed allowing milk replacement with minimal downtime.

Alternatively a capacitive sensor, which would function less optimally at the very bottom of the box can be provided nearer the top of the box, where fluid pressure forces the bag to the wall of the box. In particular a capacitive sensor is placed in an embodiment on an elastic 'belt' at a premeasured distance from the top of the box (e.g. 30 or 50 percent mark). When the level drops, the sensor is triggered and MCS starts counting subsequent use (with a safety buffer). This approach requires, again, no moving parts, and is simple, cheap, elegant, easy to clean/replace, does not require refrigerator modification and is implemented digitally.

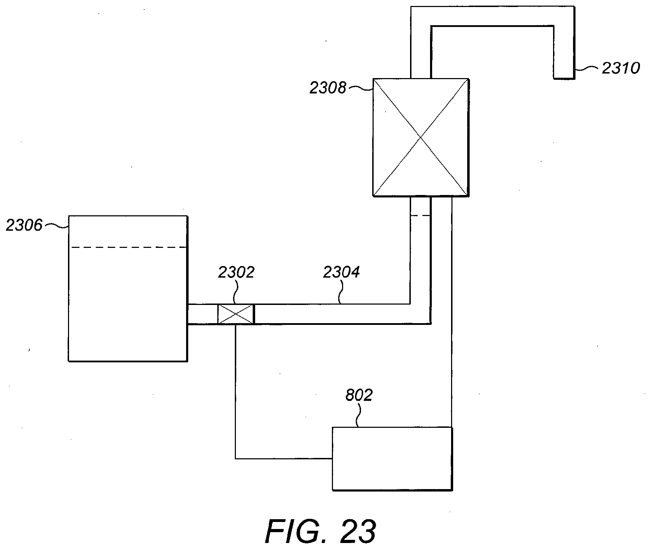

Another approach to milk monitoring in the machine can be understood with reference to Fig. 23. A pressure sensor 2302 is provided in a milk line 2304 linking a milk container 2306 with a milk pump 2308 for pumping milk into a dispensing spout 2310. The controller 802 receives input from the sensor and controls the pump. In some embodiments, the sensor 2302 is a static pressure sensor which senses the fluid pressure of the milk in the line generated by the mass of milk in the container. When the pump is activated to pump milk, the pressure in the line changes and triggers the sensor. Even where the milk pump is elevated relative to the milk container, the counter-pressure of the milk in the line from the sensor to the pump can either be discounted as negligible compared to the head of the milk in the container, or calibrated for. The controller can thus monitor activation of the pump and hence dispensing of milk via the sensor. The sensed pressure can provide a direct indication of the volume of milk remaining, for example with a lower threshold being set. If the dispense volume is known, then additionally the amount of milk remaining in the container can be calculated based on the frequency and duration of pump activation. The sensor can be of any appropriate type.

In some embodiments, a flow sensor such as a temperature-sensitive flow sensor may be used to monitor milk levels. When the pump is activated, milk flows over the sensor thus cooling it and triggering the sensor; the temperature change can be correlated to flow rate by, for example, calibration. The controller can calculate the amount of milk remaining in the container based on how much milk flows through the milk line as measured by the flow sensor.

Although described with reference to milk monitoring, these approaches could be used to measure levels of other liquid ingredients stored in the machine.

### Chocolate Module

A further module insertable into the chassis and generally available for example from Thermoplan AG is the chocolate powder dispensing module for chocolate-based drinks and also for dusting chocolate on selected drinks. The chocolate powder itself can be any appropriate type for example a fine power, coagulated powder or other.

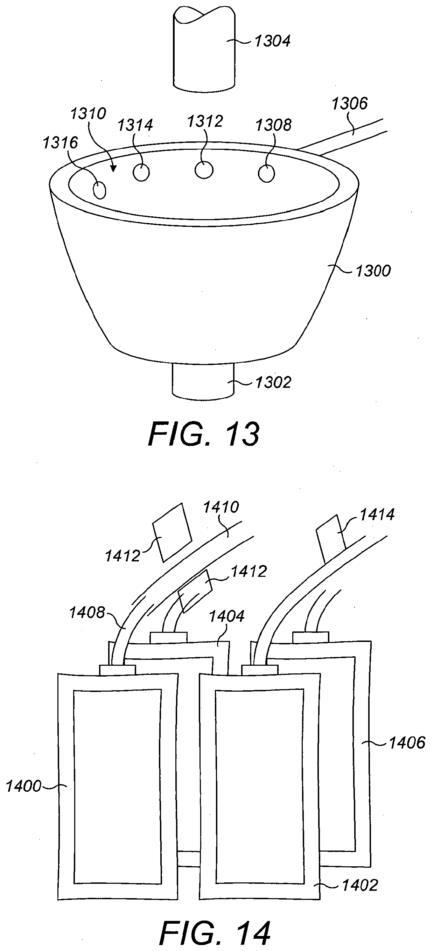

In known arrangements the chocolate powder is mixed with water in a mixing/whipping bowl prior to being dispensed to ensure high quality mixing. In an improvement described with reference to FIG 13, a chocolate mixing bowl 1300 having a dispenser outlet 1302 receives chocolate powder dropped from a nozzle 1304 and water fed via pumped line 1306 through an orifice 1308 into the interior of the bowl. The bowl can include a motorized whipper or whisker (not shown) of any appropriate type. To improve operation, the interior 1310 of the bowl can be coated with a non-stick coating such as Teflon™. Further still, rather than providing a single orifice 1308, multiple orifices 1312, 1314, 1316 etc can be provided at multiple locations around the internal circumference of the bowl, for example equally spaced. Water can be pumped in any appropriate direction for example downwardly and tangentially around the circumference of the bowl to effectively form a "water jacket" as a peripheral layer such that chocolate does not adhere to the sides of the bowl which creates additional cleaning requirements. For example water can be inserted at high pressure during the mixing operation to achieve this effect or can be inserted at low pressure, for example immediately after the mixing operation to dislodge any adhering chocolate at that stage.

Dispensing of the chocolate powder itself via nozzle 1304 can rely on driving chocolate powder via a motorized screw or displacement pump to the nozzle 1304 where it can drop by gravity. The gravity drop is preferably short and in one embodiment additional cleaning can be implemented by reversing the chocolate powder pump after dispensing the metered amount so as to withdraw further chocolate from being dispensed, again improving the cleanliness and hence reducing the cleaning burden.

An air pump (not shown) can be provided to blow air through the pipe to assist with dispensing and drying of the chocolate powder. Alternatively, a deflector can be provided to direct heated air from the normal running of the grinder/boiler/brewer into the pipe for the same purpose.

### Flavouring Module

Multiple flavours can be dispensed in the form of syrups or other flavourings for example being fructose based to provide additional taste and beverage options. Referring to FIG 14 one such bank of flavourings is shown. In the embodiment shown four flavourings containers 1400, 1402, 1404, 1406 are shown with two at the front and two at the rear although of course any configuration and number of containers can be adopted, and the arrangement can be inverted. For example, flavouring containers may be provided in a single line. A support, for example, a rubber band secured to the yoke 2602 may be provided to surround the bank of containers thereby supporting and/or preventing tilting and/or lateral movement of the containers once these are installed inside the machine. Each container comprises a sealed plastic bag having a spout 1408 communicating with an outlet line 1410 through which the flavouring can be dispensed. Either of the spout 1408 or line 1410 can interact with a peristaltic pump shown generally at 1412 to provide a precisely metered amount of flavouring. The spout 1410, or at least the dispensing orifice thereof, is of suitably small dimension that upon ceasing operation of the peristaltic pump surface tension prevents any dripping of the flavouring. This is further enhanced by the viscosity of the flavouring. Additionally an optical sensor 1414 is provided on the tube to control dosing as well as to assess whether the flavouring has run out. In the inverted configuration the optical sensor is positioned just adjacent the bag or container at the portion of tubing immediately adjacent the outlet such that the moment at which the bag empties can be accurately detected. The tubing 1410 is of sufficient length that at least one final dose volume can be contained within it such that the line will never empty, but a last dose can be delivered once "bag empty" is detected. The optical sensor can be provided in any appropriate form, for example of the type available from Omicron described at www.omicron.at. Hence mini or micro dosing for example in 5ml doses is possible; furthermore the correct flavour and sugar content can be provided even at this dosing level by use of fructose and natural flavouring which provides the required balance.

### Ice, Water, Sugar Module

Additionally an ice, water and sugar module can be implemented and fitted into the modular system as discussed above. The sugar dispensing system can include a motor of a similar nature to that described in relation to the chocolate system, and can be reversible to enhance the cleaning operation as previously described. Sugar can be dispensed through a Teflon-coated pipe and/or with air blown through with a pump for example from the chocolate mixer to reduce or remove moisture.

### Cleaning and Internal Waste Module

Waste, including cleaning water, discarded coffee "pucks" and so forth is in a preferred embodiment automatically disposed of into the local waste water system in an efficient, clean and environmentally friendly manner. Alternatively an internal waste receptacle can be fitted dependent upon regulatory environment.

The cleaning system is generally of the type available from Thermoplan AG. In general overview, all lines and components requiring cleaning are connected to a central cleaning system allowing water to be flushed through all pipes and into all areas to be cleaned such as the service port waste tray and any internal waste receptacles. As the main pump drives the flushing water the pump itself is also cleaned. The cleaning agent is a soluble tab which is inserted into a receptacle on a cleaning module bank and cleaning can be triggered or confirmed by closing of a key to confine the tab such that water is then flushed through to perform the cleaning.

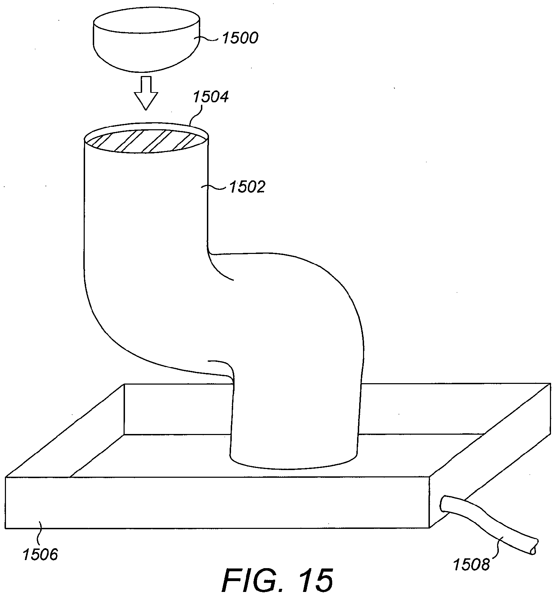

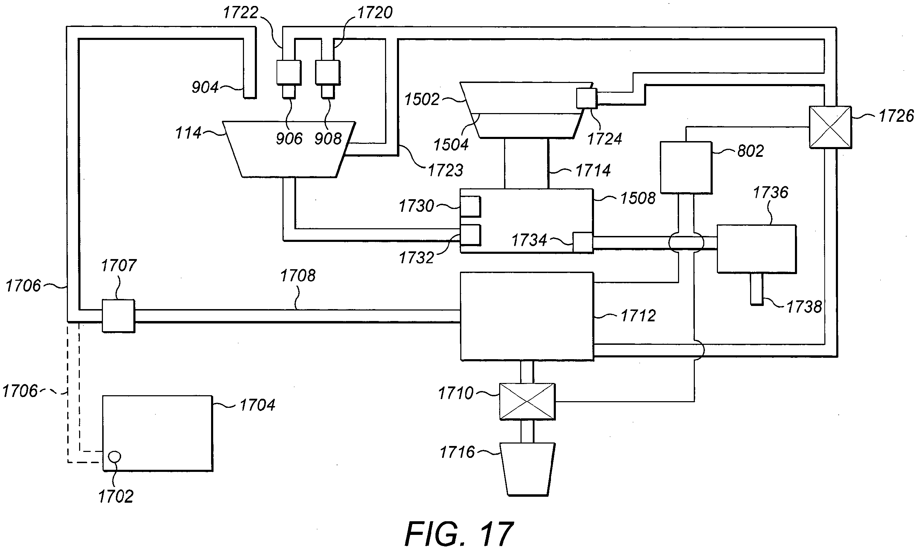

The cleaning system can be further understood with reference to Fig. 17 and comprises a flushing system into tank 1506 (Fig. 15).

Dealing first with the milk system, a milk line 1706 which allows pumping of milk via fitting 1702 to milk container 1704, can instead be fitted by the operator in a cleaning phase to cleaning circuit 1708 at connector 1707. A pair of connectors 1707 can be provided for the milk lines at respective upper corners of the refrigeration unit providing both clearance and strength. Cleaning circuit 1708 can be activated by a key 1710 carrying a cleaning tablet (solid or gel) in cleaning line 1708 which triggers pump 1712 via controller 802 to flush water through the circuit. The key can for example operate in the manner of the cleaning key supplied by Thermoplan AG. The water and cleaning agent run through the milk line to the milk outlet/spout 904, dropping into drip tray 114. The key can be located downstream of the pump or, in an embodiment, between the water supply 1716 and the pump 1712. As a result all components of the cleaning circuit including pump 1712 are flushed through, and a fully closed milk system is provided.

Regular flush throughs of all components can also be performed under control of the controller 802 activating the pump 1712 according to a control scheme such as regular intervals, every n dispenses (eg 10) or upon user operation as discussed below. To achieve this the cleaning circuit also runs from pump 1712 through coffee supply line 1720 to coffee spout 908, water line 1722 to water spout 902 and other lines as appropriate (not shown) and drip tray 114 via line 1723. Access to each line can be individually controlled by valves (not shown) under control of the controller 802. When the flush through is activated, water runs through the various lines - the coffee and water spout etc. flush through into the drip tray which drains to tank 1506 or through conduit 1502. Additionally the drip tray can be flushed through by a line from the pump directly, potentially at more regular intervals to ensure full cleanliness and no material build-up. Further still the conduit 1502 can receive a flush through via a tangential flush inlet 1724 located above the slicer 1504.

In addition to regular flush throughs, an operator induced flush through in the cleaning circuit feeding the drip tray 114, conduit 1502 and coffee etc. lines 1720, 1722, can be performed on activation of a further key 1726 carrying a cleaning tab in the manner discussed above.

The tank 1506 can carry one or more sensors 1730, 1732 which can be optical, contact, capacitive or any other suitable type. As a result draining of the tank through opening of a valve 1734 to gravity or a further pump 1736 to a waste line 1738 can be activated on detection of a full or overflow condition. This further permits cleaning agent to be retained in the tank 1506 for a period, enhancing sterile conditions yet further.

In an embodiment shown in FIG. 15 a coffee "puck" that is, the compressed used coffee grinds, is dispensed under gravity through a conduit 1502. At the top of the conduit 1502 a slicer arrangement 1504 comprising one or more parallel blades is provided to break the puck up. The conduit itself comprises a generally helical or vertical pipe or funnel 1502. During each cleaning cycle water is flushed down through the helical pipe and provides a fuller washing function by virtue of the geometry. The pipe is pumped by a pump (not shown) and waste passes through a macerator 1714 or an impeller (not shown) to an outlet or into a tank1506 which is itself then drained through an outlet 1508 to the mains for internal waste removal and disposal. The conduit 1502 may be removable so that it can be replaced with a waste puck bag into which coffee pucks may be dispensed. This configuration may be preferred if the machine is to be used in a location which does not permit solid waste such as coffee pucks to be disposed of in the general sewer system. This arrangement means that the same module can be used in all machines regardless of the ultimate location of use. Advantageously, the waste puck bag may be fitted such that liquid waste can still drain to the tank 1506 and or outlet 1508. Alternatively, the machine may be provided with a waste puck bag rather than the conduit.

In some embodiments, no conduit or slicer arrangement is provided, just a simple conical or tapering guide. Instead, coffee pucks are released directly into waste tank 1506 such that they at least partially disintegrate upon impact. It will be appreciated that such an arrangement could be used in the cleaning circuit shown in Figure 17, in place of the macerator 1714 and/or conduit 1502 and/or slicer 1504. Preferably, the tank includes a partition to separate sensors 1730, 1732 from the coffee puck solids.

Furthermore during each cleaning cycle the tray is also cleaned through, ensuring a continuing automated cleaning process for all components. Additionally jets can be provided above the drip tray allowing this to be cleaned automatically as well. As an alternative to the waste tray, the pump can be placed at the lower end of the conduit 1502 again allowing immediate clean through.

### Cooling and Refrigeration

Additional modular components include a refrigerator for storage of the milk and additional chilled components. This is monitored by the master control system to optimise power management and can be of any appropriate type.

### Operation

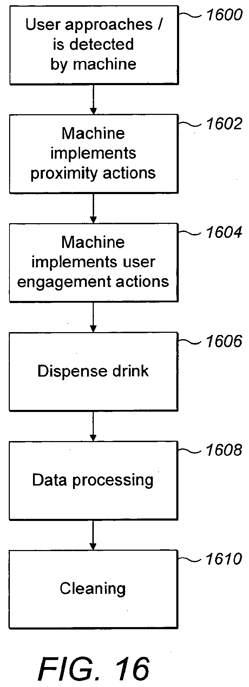

FIG. 16 shows the basic steps involved in operation of the machine. In a passive state the machine will have a live UI display on screen 120 for example showing available products offers and services. This can include not only visual components but also scent and sound components as well. The UI layout provides numerous benefits and can present elements (such as options to select) to the user in a systematic and balanced fashion irrespective of the number or type of elements to be selected between. In some embodiments, individual elements are provided at points around a circumference of a circle, oval or other curved shape. These may, in some embodiments, surround a central point at which a currently selected element is presented. Selection of an element by the user may trigger the UI to present other elements, options or instructions to the user. A particular advantage of providing elements at points around the circumference of a curved shape is that each element can be equally spaced even if an uneven number of elements are to be presented. This is in contrast to a situation where elements are presented in a grid arrangement.

As a user comes into range, for example within a predetermined distance, and is detected by camera 134 then the machine can identify user approach at step 1600. This can implement various proximity actions at step 1602. Alternatively proximity actions can be implemented upon detection of user eye engagement using any appropriate image or eye recognition technology. For example the audio content can be varied, and by using stereo speakers can provide an impression of shifting sounds to track user movement as well as potentially active noise cancellation for background noise. The scent component can additionally provide enhanced or varied fragrance and the visual interface can provide further information. All content can be triggered by cues in or detected by the machine or user interface including user proximity and image or other data detected e.g. via RFID or NFC. For example content can change with environment for example to mirror time of day, temperature, weather or season, or can even show a captured image of a user or passerby as a "reflection". Further a pulsing or other rhythmic visual component can be implemented, pulse frequency varying with, for example, proximity to module or immediacy of transaction.

At step 1604 the machine implements the user engagement actions. In one approach, the visual interface can mimic the appearance during a pre-engagement routine of approaching a physical coffee shop by displaying first the exterior and then shifting to interior and finally closing upon the counter available products. Thereafter for example if the user selects via the touch screen a cup and places it in the service port then the cup type will be detected such that the options available will reflect the cup selection. For example, the screen may display arrows or other indications showing the location of consumables such as the correct cup, or of the dispense port. Additionally based on the internal sensors the machine will ensure that only available options are presented. If the user does not place a cup then the interface will show a greater selection accordingly. Notably by including a pre-engagement routine followed by an engagement routine user selection time is minimised, enhancing the immersive user experience.

After drink selection, which can for example be presented as a carousel option on screen through the touch screen interface, the drink is dispensed, and the transaction is completed.

In one embodiment, the proximity action 1602 includes detection of a user device such as an RFID chip or NFC chip for example on a user card which can also be used for loyalty schemes for example to increment a user reward value per use. Interaction with the chip can be at various levels. In one option it can provide automated payment. In enhanced options, however, the chip can store or trigger extraction of relevant user data. For example that data can indicate a user preference for the particular location, time of day or other environmental information, or can comprise user data indicating preferred coffee style, for example based on the user's favourite "barista".

Payment can be automatic as indicated above, through card, through NFC processes or as otherwise appropriate and managed through the machine's connectivity process. At the same time data relating to the transaction is processed at step 1608 and can include processing at the machine to update its databases or transmission via Internet or other method to a central database to update usage data, customer data and so forth as appropriate and as permitted by the user preferences.

At step 1610 a cleaning step is implemented. This can be a post-dispense flush through per dispense, a regular flush through at predetermined intervals or a less regular operator instigated full clean using the cleaning system and process indicated above.

### Other Implementations

It will be appreciated that the beverage machine can dispense any form of beverage whether hot, cold or chilled, and can be provided in any location. Through the modular nature not only is repair and maintenance enhanced, but different configurations can of course be adopted for different locations for example dependent on local preferences or environmental issues such as climate at the location. One or more machines can be provided together and the door "skin" can be easily changed to suit different environments such as public spaces, office environments, transport hubs and so forth. By virtue of the complete data connectivity, preferably through the Internet or alternatively by any other appropriate means, full usage data can be obtained and processed to maximise the user experience.

## Claims

1. A beverage dispensing machine (100) comprising a brewer module and, vertically disposed below, a waste conduit (1502) and a waste receptacle (1506), the brewer module being arranged to eject a compacted beverage waste element (1500) into the waste conduit (1502), the waste receptacle (1506) being disposed to receive the waste element (1500) from the conduit, **characterized in that** the waste receptacle (1506) includes a liquid supply element, and a liquid pump communicating with a liquid flush port (1508).

2. A machine (100) as claimed in claim 1 in which the receptacle (1506) or conduit (1502) further comprises a waste breaking portion.

3. A machine (100) as claimed in claim 2 in which the breaking portion comprises a slicer (1504) in a falling path of the waste.

4. A machine (100) as claimed in any preceding claim in which the pump is automatically activated.

5. A machine (100) as claimed in any preceding claim in which the receptacle (1506) includes a macerator or impeller.

6. A machine (100) as claimed in any preceding claim in which the waste receptacle (1506) comprises one or more level sensors (1730, 1732).

7. A machine (100) as claimed in claim 6 in which the level sensors (1730, 1732) are separated from the waste receiving area of the receptacle (1506) by a liquid-passing partition.

8. A machine (100) as claimed in claim 6 or claim 7 arranged to activate the pump when a waste level threshold is detected.

## Patentansprüche

1. Getränkeausgabemaschine (100), die ein Brühmodul und vertikal darunter angeordnet eine Abfallleitung (1502) und einen Abfallbehälter (1506) aufweist, wobei das Brühmodul dazu ausgelegt ist, ein verdichtetes Getränkeabfallelement (1500) in die Abfallleitung (1502) auszustoßen, und der Abfallbehälter (1506) dazu angeordnet ist, das Abfallelement (1500) von der Leitung aufzunehmen, **dadurch gekennzeichnet, dass** der Abfallbehälter (1506) ein Flüssigkeitszuführelement und eine Flüssigkeitspumpe aufweist, die mit einer Flüssigkeitsschwallöffnung (1508) in Verbindung steht.

2. Maschine (100) nach Anspruch 1, wobei der Behälter (1506) oder die Leitung (1502) des Weiteren einen Abfallbrechabschnitt aufweist.

3. Maschine (100) nach Anspruch 2, wobei der Brechabschnitt ein Schnittmesser (1504) in einem Fallweg des Abfalls aufweist.

4. Maschine (100) nach einem der vorhergehenden Ansprüche, wobei die Pumpe automatisch aktiviert wird.

5. Maschine (100) nach einem der vorhergehenden Ansprüche, wobei der Behälter (1506) einen Zerkleinerer oder Impeller aufweist.

6. Maschine (100) nach einem der vorhergehenden Ansprüche, wobei der Abfallbehälter (1506) einen oder mehrere Füllstandsfühler (1730, 1732) aufweist.

7. Maschine (100) nach Anspruch 6, wobei die Füllstandsfühler (1730, 1732) durch eine Flüssigkeitsdurchtrittstrennung von dem abfallaufnehmenden Bereich des Behälters (1506) getrennt sind.

8. Maschine (100) nach Anspruch 6 oder 7, die dazu ausgelegt ist, die Pumpe zu aktivieren, wenn eine Abfallfüllstandsschwelle ermittelt wird.

## Revendications

1. Machine de distribution de boisson (100) comprenant un module brasseur et, disposé verticalement au-dessous, un conduit à déchets (1502) et un réceptacle à déchets (1506), le module brasseur étant agencé pour éjecter un élément de déchets de boisson compacté (1500) dans le conduit à déchets (1502), le réceptacle à déchets (1506) étant disposé pour recevoir l'élément de déchets (1500) à partir du conduit, **caractérisée par le fait que** le réceptacle à déchets (1506) comprend un élément de d'alimentation en liquide, et une pompe à liquide communiquant avec un orifice d'évacuation de liquide (1508).

2. Machine (100) selon la revendication 1, dans laquelle le réceptacle (1506) ou le conduit (1502) comprend en outre une partie de rupture de déchets.

3. Machine (100) selon la revendication 2, dans laquelle la partie de rupture comprend une trancheuse (1504) dans un trajet de chute des déchets.

4. Machine (100) selon l'une quelconque des revendications précédentes, dans laquelle la pompe est activée automatiquement.

5. Machine (100) selon l'une quelconque des revendications précédentes, dans laquelle le réceptacle (1506) comprend un déchiqueteur ou un agitateur.

6. Machine (100) selon l'une quelconque des revendications précédentes, dans laquelle le réceptacle à déchets (1506) comprend un ou plusieurs capteurs de niveau (1730, 1732).

7. Machine (100) selon la revendication 6, dans laquelle les capteurs de niveau (1730, 1732) sont séparés de la région de réception de déchets du réceptacle (1506) par une cloison laissant passer les liquides.

8. Machine (100) selon la revendication 6 ou 7, agencée pour activer la pompe lorsqu'un seuil de niveau de déchets est détecté.
